(19) Europäisches Patentamt / European Patent Office / Office européen des brevets

(11) **EP 4 685 711 A1**

(12) **EUROPEAN PATENT APPLICATION**

(43) Date of publication:
   **28.01.2026 Bulletin 2026/05**

(21) Application number: **24306260.1**

(22) Date of filing: **25.07.2024**

(51) International Patent Classification (IPC):
   **G06N 10/40** (2022.01)      **G06N 10/70** (2022.01)

(52) Cooperative Patent Classification (CPC):
   **G06N 10/40; G06N 10/70**

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **GE KH MA MD TN**

(71) Applicant: **Alice & Bob**
   **75015 Paris (FR)**

(72) Inventors:
   • **MAGNARD, Paul**
    **75015 Paris (FR)**
   • **LESCANNE, Raphaël**
    **75015 Paris (FR)**

(74) Representative: **Atout PI Laplace**
   **Immeuble Up On**
   **25 Boulevard Romain Rolland**
   **CS 40072**
   **75685 Paris Cedex 14 (FR)**

(54) **QUANTUM SYSTEM FOR HOSTING LOGICAL QUBITS PROTECTED BY AN ERROR CORRECTING CODE**

(57)    A quantum system for hosting logical qubits protected by an error correcting code comprises:
* a command circuit (4) for selectively applying radiation,
* a superconducting quantum circuit (6) comprising
- a plurality of data resonators (8), each data resonator (8) being coupled to said command circuit (4) for stabilizing a respective data cat qubit,
- a plurality of ancilla resonators (10), each ancilla resonator being coupled to said command circuit (4) for stabilizing a respective ancilla qubit,
- the data resonators (8) and the ancilla resonators (10) are arranged on said superconducting quantum circuit into lines (12) comprising alternating data resonators and ancilla resonators,
- the lines not crossing one another and defining a first end line and a second end line,
- each data resonator and each ancilla resonator (10) of a line being connected to its immediate neighbors within its line, and
- for all but the second end line, the ancilla resonators are connected to a data resonator of an adjacent line in the direction going from the first end line to the second end line, such that all ancilla resonators are connected to at least two and at most to three data resonators,

the command circuit (4) being further arranged to operate a quantum gate between two data cat qubits connected by an ancilla qubit only using operations involving two or three resonators chosen among the group comprising said the data resonators hosting the data qubits and the ancilla resonator, with the data resonators being always involved.

FIG. 1

**Description**

The invention concerns a quantum system for hosting logical qubits protected by an error correcting code, and particularly a quantum system comprising cat qubits.

A. Background

The Applicant has been working for several years on the realization of quantum computers, and particularly quantum computers relying on cat qubits.

To provide a quantum computer, one must have a set of basis elements, such as data qubits which are linked into logical qubits by means of an error correcting code to provide fault tolerance, and the ability to perform quantum gates on the data qubits for the error correcting code, and on the logical qubits for the logical qubits.

The discovery of highly performant cat qubits by the Applicant has led to a radical progress toward providing a quantum computer. Indeed, the Applicant discovered a way to manufacture and operate resonators for hosting a cat qubit in which the bit flip error time is orders of magnitude bigger than the phase flip error time, effectively reducing the error correction paradigm from two dimensions (phase flip and bit flip) to one dimension (phase flip only).

The Applicant has explored several architectures for providing a quantum circuit chip, involving various error correction schemes, whether linear (error correction code) or not (surface code, LDPC code, etc.).

In all cases, a big challenge to scaling to a quantum circuit having a useful amount of logical qubits relates to the fact that providing logical qubits and performing quantum gates necessitates connecting data cat qubits and ancilla qubits together, and that it is extremely difficult to provide a great number of resonators used for hosting interconnected cat qubits without having the various radiations or modes interacting between them. In the following, while the data qubits are necessarily cat qubits, the ancilla qubits can be either of the cat qubit type or of another type such as transmon, GKP qubit, fluxonium qubit, spin qubit etc.

In other words, it is one thing to provide a quantum circuit providing error correction for a single logical qubit, and an entirely different thing to provide the same for 10, 100 or several thousands of logical qubits.

This industrialization and scaling aspect has been considered in only a theoretical manner in the prior art, and there is no known practical approach to the specific choice of inter-connectivity between the designated ancilla qubits and data cat qubits which results in a robust yet functionally flexible design. Herein by flexible design it is meant "a design which aims to demonstrate a few key elements of fault-tolerant quantum computing".

To achieve these two goals requires striking a compromise. Robustness requires the ability to tolerate some qubit and/or qubits connection failures while still providing a useful circuit. Furthermore, the quantum chip should have a low-degree connectivity, as high connectivity is associated with a host of potential problematic phenomena such as unintentional frequency collisions etc.

A first simple choice would be to design a chip with only rigidly defined distinct linear data-ancilla-data arrays, each to host a repetition code. However, a single failure in a connection could cut the length of an array available to host a repetition code by up to a half.

Additionally, it is sought to perform logical operations, e.g. between two repetition codes within the quantum chip, or between 3 logical qubits etc., which conventionally requires connecting each data qubit of one to a corresponding data qubit of the other. In this case, any failed connection would be even more detrimental than in the repetition code, potentially impeding any attempt to perform a logical gate. Moreover, only a repetition code could be performed, i.e. there would be no possibility of performing an LDPC code having a stabilizer weight greater than 2. This quantum chip would thus be particularly vulnerable to failed connections and have inflexible functionality.

Another choice for maximum flexibility, would be to design a chip with complete nearest-neighbor connectivity between all cat qubits. However this too is unattractive as it would require the maximum amount of connections of all designs and would induce frequency crowding problems.

Hence, there is no obvious solution to achieving a long-lived logical qubit ($d \geq 20$ repetition code with errors of $10^{-5}$ or lower, where d is the so-called Hamming distance), entangling logical gates (transversal CNOT at $d \geq 3$ and below threshold), all-to-all logical connectivity (not only transversal CNOT, but also lattice surgery below threshold i.e. broadly gets better as you scale up), and ready-to-scale fault-tolerant quantum computing (FTQC) architecture.

The invention aims at improving the situation.

B. Summary

To this end, the Applicant proposes a quantum system for hosting logical qubits protected by an error correcting code comprising :

    * a command circuit for selectively applying radiation,

    * a superconducting quantum circuit comprising a plurality of data resonators, each data resonator being coupled to said command circuit for stabilizing a respective data cat qubit, a plurality of ancilla resonators, each ancilla resonator being coupled to said command circuit for stabilizing a respective ancilla qubit, said plurality of data resonators and said plurality of ancilla resonators being arranged on said superconducting quantum circuit into a plurality of lines comprising a plurality of alternating data resonators and ancilla resonators, said lines being arranged such that no line crosses another line, thereby defining a first end line and a second end line, each data resonator and each ancilla resonator of any given line being connected to its immediate neighbors within this given line, and for every line but the second end line, substantially all ancilla resonators of a given line are each connected to a data resonator of an adjacent line in the direction going from the first end line to the second end line, such that substantially all ancilla resonators are connected to at least two data resonators and at most to three data resonators.

The command circuit is further arranged to operate a quantum gate between any data cat qubit stabilized in a first data resonator of said plurality of data resonators and another data cat qubit stabilized in a second data resonator of said plurality of data resonators which is directly connected to an ancilla resonator to which said first data resonator is directly connected only using operations involving two or three resonators chosen among the group comprising said first data resonator, said second data resonator and said ancilla resonator directly connected therebetween, with said first data resonator, said second data resonator being always involved.

This quantum system is advantageous because it offers an optimal compromise, which balances reducing the number of connections (and the number of failed connections which could be tolerated) whilst maintaining functional flexibility.

As will appear in relation to the embodiments described below, it is able to exhibit several of the following advantages:

(i) a distance 20 repetition code even with a number of connection/cat qubit failures, given that the designed connectivity enables a repetition code path to be contorted to avoid failed connections/cat qubits;
(ii) the ability to run a stability experiment, that is to run a closed-loop circular repetition code which allows to check extra statistics which provide errors of operations such as lattice surgery/transversal CNOTS/movements of logical qubit - which allows one to benchmark quality of local operations beyond just idling, i.e. beyond just a quantum memory;
(iii) the ability to build a library of logical operations including logical movement, and logical merge and split, i.e. the basis of lattice surgery including more than one logical qubit;
(iv) the ability to perform multitarget CNOT gates with cat-only datas/ancillas; and
(v) exhibit an LDPC code of distance D (formed from a number E of "L-shaped" stabilizers) to exhibit a logical memory.

In various embodiments, the method may present one or more of the following features:

- substantially all data resonators are connected to another data resonators of an adjacent line,
- substantially all data resonators are exclusively connected to an ancilla resonator,
- the ancilla qubits are of a type chosen in the group comprising cat qubit type, transmon type, GKP type, spin qubit type, and fluxonium type,
- said lines are substantially straight,
- said lines are substantially parallel between them,
- the data resonators and the ancilla resonators are arranged in a grid-like geometry, and
- substantially all ancilla resonators which are connected to a data resonator of an adjacent line in the direction going from the first end line to the second end line are connected to the data resonator of said adjacent line which is the closest in a chosen line direction which is the same for all ancilla resonators of said quantum system and such that a data resonator of a given line is connected to at most one ancilla resonator of another line.

Other features and advantages of the invention will readily appear in the following description of the drawings, which show exemplary embodiments of the invention and on which:

- Figure 1 shows a first embodiment of a quantum circuit according to the invention,
- Figure 2 shows a second embodiment of a quantum circuit according to the invention,
- Figure 3 shows how a repetition code can be performed with the embodiment of figure 1, as well as the consequence of failures of several cat qubits,
- Figure 4 shows the consequence of failures of several cat qubits on a quantum gate with the embodiment of figure 1,
- Figure 5 shows how a lattice surgery CX gate can be performed with the embodiment of figure 1, as well as how to deal with failures of several cat qubits,
- Figure 6 shows how a lattice surgery CXX gate can be performed with the embodiment of figure 1,
- Figure 7 shows how a circular code can be performed with the embodiment of figure 1,
- Figure 8 shows an exemplary embodiments of a circuit for performing a CNOT gate without data to data connections, and
- Figure 9 shows another exemplary embodiments of a circuit for performing a CNOT gate without data to data connections.

The drawings and the following description are comprised for the most part of positive and well-defined features. As a result, they are not only useful in understanding the invention, but they can also be used to contribute to its definition, should the need arise.

## C. Cat qubits

So far, the Applicant's work has been generally concerned with the stabilization of cat qubits. As previously explained, R. Lescanne et *al.* (2020) demonstrated that such cat qubits can be stabilized with a non-linear conversion between two photons of a first mode a - memory mode or cat qubit mode - and one photon of a second mode b - buffer mode.

A cat qubit is defined as a two-dimensional manifold spanned by the so-called cat states $|C_\alpha^\pm\rangle$ which are superpositions of two coherent states $|\alpha\rangle$ and $|-\alpha\rangle$:

$$|C_\alpha^\pm\rangle = N^\pm(|\alpha\rangle \pm |-\alpha\rangle)$$

with:

$$N^\pm = \frac{1}{\sqrt{2(1 \pm e^{-2|\alpha|^2})}}$$

Stabilized cat qubits are known to benefit from a high noise bias, which means that the bit-flip probability is exponentially smaller than the phase-flip probability. More precisely, an effective error channel (e.g., bit errors or "bit-flips") is suppressed in an exponential way with the "size" - i.e. the average number of photons $\overline{n} = |\alpha|^2$ - of the Schrödinger cat states of the cat qubits. As previously mentioned, this exponential suppression of bit-flip errors is only at the cost of linear increase of phase-flip errors.

According to current knowledge, this suppression should apply to a large class of physical noise processes having a local effect on the phase space of a harmonic oscillator. This includes, but is not limited to, photon loss, thermal excitations, photon dephasing, and various nonlinearities induced by coupling to a Josephson junction.

Recent experiments in the context of superconducting quantum circuits have observed this exponential suppression of bit-flip errors with the average number of photons in the cat states.

It is generally considered that the use of a single repetition code is sufficient to correct the remaining errors as bit-flip errors are sufficiently rare; and, more particularly, a phase-flip error correction code is sufficient to correct the remaining phase-flip. This can be for instance a repetition code defined in the dual base or any other state-of-the-art error correction code.

## D. Stabilization schemes

The cat qubits can be stabilized or confined by the following exemplary schemes:

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to Josephson junctions - to the cat qubit mode a and by engineering the Hamiltonian $H/\hbar = g_2(a^2\text{-}a^2)b^\dagger$ + h.c., where $b$ is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < k_b$.

b) a Kerr Hamiltonian
$$H/\hbar = \frac{K}{2}(a^{\dagger 2} - \alpha^2)\left(a^2 - \overline{\alpha^2}\right)$$
, where $K$ is the amplitude of the Kerr Hamiltonian, $\alpha$ is the photon annihilation operator, and $|\alpha|^2$ is the mean photon number.

c) a detuned Kerr Hamiltonian
$$H/\hbar = \frac{K}{2}(a^{\dagger 2} - \alpha^2)\left(a^2 - \overline{\alpha^2}\right) - \Delta a^\dagger a$$
, where $K$ is the amplitude of the Kerr Hamiltonian, a is the photon annihilation operator, $\alpha$ is a complex number defining the cat qubit, and $\Delta$ is the detuning factor.

d) a two-photon exchange (TPE) Hamiltonian $H/\hbar = g_2(a^2 - \alpha^2)\sigma_+$ + h. c., where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

e) a dissipative squeezing stabilization, with jump operator $L_{SC} = \sqrt{\kappa_{SC}}\left(\left(\cosh(r)a + \sinh(r)e^{i\theta}a^\dagger\right)^2 - \alpha^2\right)$, where $\kappa_{SC}$ is the squeezed two-photon dissipation rate, $a$ is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian $H/\hbar = g_{SC}((\cosh(r)a + \sinh(r)e^{i\theta}a^\dagger)^2 - \alpha^2)b^\dagger$ + h.c., where $b$ is the photon annihilation operator of mode b and $g_{SC}$ is the squeezed two-photon coupling rate, with several pumps at frequencies $|2f_a - f_b|$, $f_b$ and $2f_a + f_b$, and a drive of the buffer mode b at frequency $f_b$ provided

$$g_{sc} < \kappa_b.$$

f) a variant of the previous stabilization scheme e), for which the Applicant filed the European patent application EP 23175147.0, in which a bosonic qubit - called "*moon cat qubit*" since the two blobs of the Wigner function have a crescent moon shape - is stabilized by engineering the Hamiltonian $H/_\hbar = g_2(a^2 + \lambda a^\dagger a - \alpha^2)b^\dagger$ + h. c., where $g_2$ is the amplitude of a pump at frequency $|2f_a - f_b|$, a is the annihilation operator of the cat qubit mode a, $\lambda$ is a complex number which phase and amplitude result from the amplitude of longitudinal coupling produced by a pump at frequency $f_b$, $\alpha$ is a complex number resulting from a drive of the buffer mode b at frequency $f_b$ and $b$ is the annihilation operator of the buffer mode b; a comparison between the moon cat qubit and the squeezed cat qubit could be established by expressing $\lambda$ as a function of the complex squeezing parameter $\xi = re^{i\theta}$ as follows: $\lambda$ = 2tanh $(r)$.

g) a resonant dissipative stabilization, with jump operator $L_2 = \sqrt{\kappa_2}(a^2 - \alpha^2)$, where $\kappa_2$ is the two-photon dissipation rate, *a* is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $H/_\hbar = g_2(a^2-\alpha^2)b^\dagger$ + h.c., where $b$ is the photon annihilation operator of the buffer mode b provided the mode frequencies verify substantially $2f_a = f_b$ and $g_2 < \kappa_b$ to which a drive of the buffer mode at frequency $f_b$ is added.

The present invention may implement any of these stabilization schemes to generate the data cat qubits and the ancilla qubits used in the quantum system described below. In the below description, the physical implementation of the cat qubits, that is the resonator driven in a specific manner to stabilize a cat qubit will be identified to the cat qubit it hosts. Hence, the expression "cat qubit" and "cat" will designate both the physical entity hosting the cat qubit and the cat qubit itself. Similarly, the word ancilla will designate an ancilla qubit and the physical entity hosting it, and the word data will designate a data cat qubit and the physical entity hosting it. The notion of ancilla and data relate to their roles in an FTQC, whereby the ancilla is used to measure errors on the data and help correct it. In some embodiments relating to the implementation of quantum gates, the words control and target will designate both the qubit having the corresponding role (control or target) in the quantum gate as well as the physical entity hosting it. Here again, "target" will designate a "target qubit" or a "target cat qubit" and "control" will designate a "control qubit" or "control cat qubit".

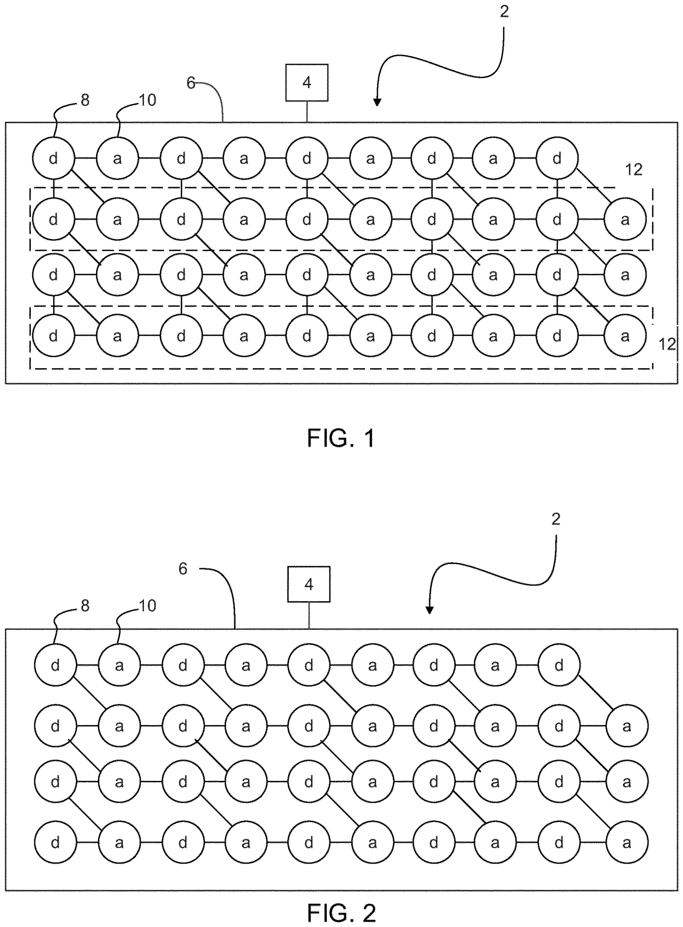

Figure 1 shows a first embodiment of a quantum circuit according to the invention.

As appears on this figure, a quantum system 2 comprises a command circuit 4 which is arranged to apply radiation to resonators of a superconducting quantum circuit 6 in order to stabilize a respective cat qubit in each respective resonator. The superconducting quantum circuit comprises two types of resonators: data resonators 8 (labeled "d") and ancilla resonators 10 (labeled "a"). As a result, the data resonators 8 host data cat qubits, and the ancilla resonators 10 host ancilla qubits.

In the example shown here, the resonators are substantially aligned in a grid like geometry in lines and rows. In various embodiments, the resonators in any given line or any given row maybe slightly offset with respect to the others within the same line or row. Furthermore, other geometries could be used for arranging the resonators, such a curved lines or other. What matters most is that the lines of resonators form lines. On figure 1, two lines 12 are shown, and they are substantially parallel between them. Here again, the lines maybe imperfectly parallel, as long as they do not intersect or otherwise cross.

The reason for that is that, within a given line, there is a strict alternance of data cat qubits and ancilla qubits, and each cat is connected to its two immediate neighbors within the line. This pattern is a first essential element which provides the robustness / flexibility compromise of the invention. The second essential element is that the lines are interconnected, with each ancilla being connected to a data of the line above. It will appear readily here that "above" is a relative term depending on the arrangement of the superconducting quantum circuit 6. In the example shown here, each ancilla is connected to the data in the line immediately above, and immediately to the left of the ancilla. As an alternative, the ancilla could be connected to the data immediately to the right, or in the line immediately below. This arrangement defines a bottom most line or first end line and a top most line or second end line, and the connection with the line below or above can be seen as being made in a constant direction from the first end line to the second end line.

In some embodiments, one may imagine connecting lines not immediately neighboring one another, or connecting an ancilla and a data which are further than immediately to the left or to the right in the line above or below. However, this means that the routing of the connections will be complex to manufacture, and one should also keep in mind that longer connections are more prone to errors.

Furthermore, in the example shown of figure 1, the lines are associated by pairs, such that each data of a line of a given pair is connected to the data of the other line of that given pair immediately below or above it.

As a result, one can see that the topography of the superconducting quantum circuit 6 of figure 1 allows for both robustness and flexibility. Indeed, on the one end, a very long repetition code, or a classical LDPC code as described by the Applicant in EP23307437.6.

While the example shown on figure 1 represents a grid having 4 lines and 10 rows, it will appear readily that there could be more lines or more rows but also less (although that would be less interesting, particularly below 7 total resonators). Incidentally, figure 1 shows that the top most line has one less ancilla than the other lines. This is normal and due to the topography described above. In some implementations, there can be a resonator in the place of the empty space of the top most line. It only matters that this resonator not host a cat qubit or any qubit at all and that it remains isolated from the rest of the superconducting quantum circuit 6.

Figure 2 represents a second embodiment according to the invention. It is similar to the first embodiments, except that all of the data to data connections have been removed. The main interest of that second embodiment is that the Applicant has discovered a manner to perform a CNOT gate without the data to data connections, and the resulting topography is as flexible as that of the first embodiment, but with more robustness due to the smaller amount of connections (hence less risks of frequency crowding as well as noise spreading).

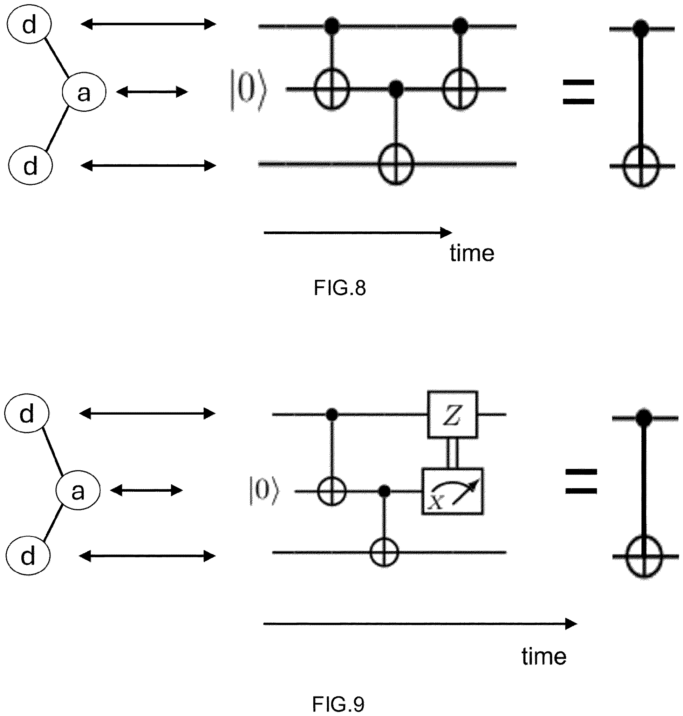

For instance, the CNOT gate between a control data cat qubit and a target data cat qubit can be performed as shown in figures 8 and 9, which show exemplary embodiments of circuits for performing a CNOT gate without data to data connections.

The left-hand side of figure 8 shows two data resonators each directly connected to an ancilla resonator. The right-hand side of figure 8 shows the circuit of quantum gates to be applied to the qubits hosted in the respective resonators, wherein the top line is the control data cat qubit, the middle line is ancilla qubit, and the bottom line is the target data cat qubit. As indicated by the right-hand side of figure 8, this is functionally equivalent to performing a CNOT directly between the two data cat qubits.

The ancilla qubit is prepared in a "0" state. A first CNOT gate is performed between the control data cat qubit as control and the prepared ancilla qubit as target. A second CNOT gate is performed between the ancilla qubit as control and the target data cat qubit as the target. A third CNOT gate is performed between the control data cat qubit as control and the prepared ancilla qubit as target. The first, second, and third CNOT gates are performed sequentially in that order.

Figure 9 is similar to figure 8, but with the third CNOT gate omitted. Instead, after the second CNOT gate, a measurement is performed of the ancilla qubit in the X basis. A Z-gate is then applied to the control data cat qubit depending on the result of the X measurement. As will be appreciated, the Z-gate need not be physically performed, but instead tracked in the classical computation so as to be performed later on in an algorithm.

Figures 8 and 9 are only exemplary embodiments, and any number of variations of circuits of quantum gates may be envisaged which are functionally equivalent to performing a CNOT directly between the two data cat qubits. For instance, in Figure 9 the ancilla may be prepared in another state, such as the "1" state. Similarly, other known circuits of quantum gates may be constructed which are equivalent to other two-qubit quantum gates between the two data cat qubits, such as the controlled-Z "CZ" gate. For instance, in figure 8, the first, second, and third CNOT gates may each be replaced with physical CZ gates, to be functionally equivalent to a CZ gate performed directly between the data cat qubits.

What is important however in the embodiment of figure 2, is that command circuit 4 is configured to operate a quantum gate between a data cat qubit stabilized in a first data resonator and another data cat qubit stabilized in a second data resonator which is directly connected to an ancilla resonator to which said first data resonator is directly connected, wherein the command circuit 4 is configured to operate the quantum gate only using operations involving the first data resonator, the second data resonator and the ancilla resonator directly connected therebetween.

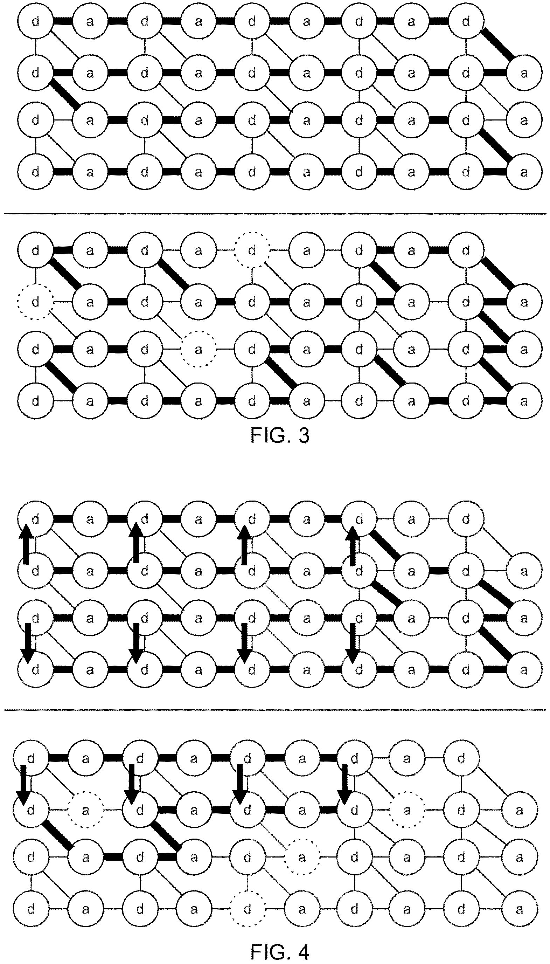

The advantages of the topographies of the embodiments of figure 1 and figure 2 will be made apparent through the examples of figures 3 to 7 below. On these figures, only the cat qubits and their connections are shown for simplicity's sake.

The top part of figure 3 shows how a d=19 repetition code can be instantiated in the superconducting quantum circuit 6, via the line shown in bold. The bottom part of figure 3 shows that, even losing three qubits (two data cat qubits and one ancilla qubit shown in dashed lines), it is still possible to maintain a d=16 repetition code.

The top part of figure 4 shows how a transverse CX gate can be performed. To that end, two repetition codes are generated as shown via the line shown in bold, with one of the codes surrounding the other one. Thereafter, CNOT gates are performed between data qubits of the respective repetition codes. For each data qubit of the target repetition code (which is the inner repetition code here), a CNOT is performed with this qubit being the target, and a data qubit of the other repetition code (which is the surrounding repetition code here) being the control. As there are eight CNOTS, a d=8 transverse CX gate can be performed. The CNOT gates are shown by means of a bold arrow signifying the control / target roles, the qubit which is pointed to by the arrow being the target, and the other qubit being the control. In this case, the CNOT gates involve only two qubits, *i.e.* the data cat qubits of the respective repetition codes.

The bottom part of figure 4 shows that, starting from the quantum system of the top portion, a d=5 transverse CX gate can still be performed after losing four qubits (two ancilla qubits and two data cat qubits shown in dashed line).

Hence, contrary to what was known with the classical LDPC patent application mentioned above, this topography allows to operate a quantum gate between any given data cat qubit stabilized in a control data resonator and another data cat qubit stabilized in a target data resonator which is directly connected to an ancilla resonator to which the control data resonator is directly connected only using operations involving this control data resonator, the target data resonator and the ancilla resonator directly connected therebetween.

For the avoidance of doubt, herein by two resonators being "directly connected", it is understood to mean that a physical CNOT gate may be directly performed between a qubit hosted in one of the two resonators and a qubit hosted in the other of the two resonators. For instance, in an embodiment wherein a dissipatively stabilized cat qubit is hosted in a memory resonator, the memory resonator may be directly coupled to another qubit by means of a linear coupler. An example of a linear coupler is a capacitive coupler or an inductive coupler. An exemplary capacitive coupler is a co-planar waveguide having one end placed in proximity to the memory resonator so as to be substantially capacitively coupled thereto, and another end placed in proximity to the resonator of the other qubit so as to be substantially capacitively coupled thereto (such as close to one of the capacitive pads of a transmon or close to a memory resonator of another dissipatively stabilized cat qubit).

But this topographies also allow to perform lattice surgery CX and CXX as was described with the classical LDPC patent application mentioned above.

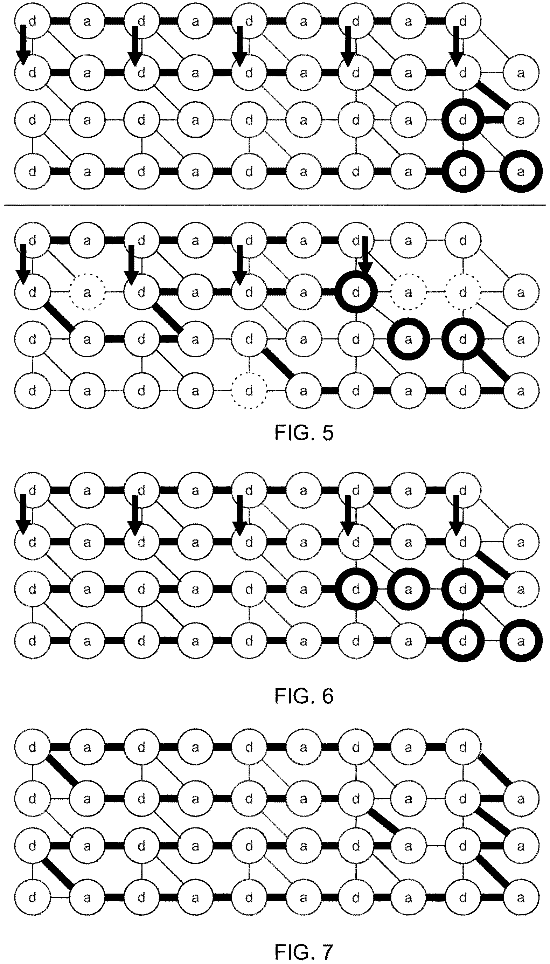

Indeed, figure 5 shows how to perform a lattice surgery CX gate. As with the previous figures, the bold lines show how repetition codes are provided, the arrows show how CNOT can be performed, and additionally, the bold qubits indicate how an MXX quantum measurement can be performed.

In the top of figure 5, a d=5 lattice surgery CX gate between a control repetition code in the top part, a lattice repetition code immediately below it, and a target repetition code in the bottom.

In the bottom of figure 5, it is shown that, even losing four qubits (two ancilla qubits and two data cat qubits shown in dashed line), it is still possible to perform a d=4 lattice surgery CX gate. Again, the repetition codes can be reconfigured astutely to provide maximum robustness and flexibility.

Even more interestingly, figure 6 shows how a lattice surgery CXX gate can be performed. In the example shown here, a d=5 lattice surgery CXX gate can be realized between a control repetition code in the top part of the figure, and two target repetition codes in the bottom of the figure, with an auxiliary or lattice repetition code in between them having an end data cat qubit which can be part of a MXX measurement gate with the two data cat qubits of the target repetition codes as shown with the bold qubits.

Figure 7 further shows how a d=18 circular code can also be performed. One will also easily envision how this topography can be used to perform a classical LDPC code with a stabilizer having an L-shape. In the example topographies shown here with 36 cat qubits, a [18,3,9] classical LDPC code involving 18 data cat qubits, and 15 ancilla cat qubits to instantiate 3 logical qubits of distance 9 can be obtained.

More generally speaking, other quantum gates could be implemented, in which case the notions of control qubit / target qubit mentioned above should be replaced by first qubit / second qubit.

**Claims**

1. Quantum system for hosting logical qubits protected by an error correcting code comprising :

   * a command circuit (4) for selectively applying radiation,
   * a superconducting quantum circuit (6) comprising

      - a plurality of data resonators (8), each data resonator (8) being coupled to said command circuit (4) for stabilizing a respective data cat qubit,
      - a plurality of ancilla resonators (10), each ancilla resonator being coupled to said command circuit (4) for stabilizing a respective ancilla qubit,
      - said plurality of data resonators (8) and said plurality of ancilla resonators (10) being arranged on said superconducting quantum circuit into a plurality of lines (12) comprising a plurality of alternating data resonators and ancilla resonators,
      - said lines being arranged such that no line crosses another line, thereby defining a first end line and a second end line,
      - each data resonator and each ancilla resonator (10) of any given line being connected to its immediate neighbors within this given line, and
      - for every line but the second end line, substantially all ancilla resonators of a given line are each connected to a data resonator of an adjacent line in the direction going from the first end line to the second end line, such that substantially all ancilla resonators are connected to at least two data resonators and at most to three data resonators,

      said command circuit (4) being further arranged to operate a quantum gate between any data cat qubit stabilized in a first data resonator of said plurality of data resonators and another data cat qubit stabilized in a second data resonator of said plurality of data resonators which is directly connected to an ancilla resonator to which said first data resonator is directly connected only using operations involving two or three resonators chosen among the group comprising said first data resonator, said second data resonator and said ancilla resonator directly connected therebetween,

with said first data resonator, said second data resonator being always involved.

2. Quantum system according to claim 1, in which substantially all data resonators are connected to another data resonators of an adjacent line.

3. Quantum system according to claim 1, in which substantially all data resonators are exclusively connected to an ancilla resonator.

4. Quantum system according to one of the preceding claims, in which the ancilla qubits are of a type chosen in the group comprising cat qubit type, transmon type, GKP type, spin qubit type, and fluxonium type.

5. Quantum system according to one of the preceding claims, in which said lines (12) are substantially straight.

6. Quantum system according to one of the preceding claims, in which said lines (12) are substantially parallel between them.

7. Quantum system according to one of the preceding claims, in which the data resonators (8) and the ancilla resonators (10) are arranged in a grid-like geometry.

8. Quantum system according to one of the preceding claims, in which substantially all ancilla resonators which are connected to a data resonator of an adjacent line in the direction going from the first end line to the second end line are connected to the data resonator of said adjacent line which is the closest in a chosen line direction which is the same for all ancilla resonators of said quantum system and such that a data resonator of a given line is connected to at most one ancilla resonator of another line.

FIG. 1

FIG. 2

FIG. 3

FIG. 4

FIG. 5

FIG. 6

FIG. 7

FIG.8

FIG.9

Europäisches
Patentamt
European
Patent Office
Office européen
des brevets

# EUROPEAN SEARCH REPORT

**Application Number**

EP 24 30 6260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | \'ELIE GOUZIEN ET AL: "Performance Analysis of a Repetition Cat Code Architecture: Computing 256-bit Elliptic Curve Logarithm in 9 Hours with 126133 Cat Qubits", ARXIV.ORG, CORNELL UNIVERSITY LIBRARY, 201 OLIN LIBRARY CORNELL UNIVERSITY ITHACA, NY 14853, 4 August 2023 (2023-08-04), XP091580059, DOI: 10.1103/PHYSREVLETT.131.040602 * Abstract * * p1,p4,p23,p26,p28 * * figures 25,27 * | 1-8 | INV. G06N10/40 G06N10/70 |
| A | US 2022/327410 A1 (CHAMBERLAND CHRISTOPHER [US] ET AL) 13 October 2022 (2022-10-13) * the whole document * | 1,4-7 | |

**TECHNICAL FIELDS SEARCHED (IPC)**

G06N

The present search report has been drawn up for all claims

| Place of search | Date of completion of the search | Examiner |
|---|---|---|
| The Hague | 14 January 2025 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 685 711 A1

## ANNEX TO THE EUROPEAN SEARCH REPORT
## ON EUROPEAN PATENT APPLICATION NO.

EP 24 30 6260

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | Publication date | Patent family member(s) | Publication date |
|---|---|---|---|
| US 2022327410 A1 | 13-10-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23175147
- EP 23307437